# EUROPÄISCHE PATENTSCHRIFT

(11) **EP 1 721 092 B1**
(45) Veröffentlichungstag und Bekanntmachung des Hinweises auf die Patenterteilung: **07.03.2012**
(21) Anmeldenummer: 04803471.4
(22) Anmeldetag: 03.12.2004
(51) Int. Cl.: F16H 61/662

(54) **AUTOMATIKGETRIEBE MIT STUFENLOS VERSTELLBARER ÜBERSETZUNG**
AUTOMATIC GEARBOX WITH INFINITELY-VARIABLE RATIO
BOITE DE VITESSES AUTOMATIQUE A TRANSMISSION VARIABLE EN CONTINU

(30) Priorität: 08.12.2003 DE 10357239
(43) Veröffentlichungstag der Anmeldung: 15.11.2006
(73) Patentinhaber: AUDI AG, 85045 Ingolstadt (DE); Conti Temic microelectronic GmbH, 90411 Nürnberg (DE)
(72) Erfinder: WILD, Horst, 91238 Engelthal (DE); WOHLRAB, Klaus, 91781 Weissenburg (DE)
(74) Vertreter: Thielmann, Frank
(86) Internationale Anmeldenummer: PCT/EP2004/013739
(87) Internationale Veröffentlichungsnummer: WO 2005/054719

(56) Entgegenhaltungen:
- EP-A- 0 978 410
- DE-A1- 19 645 975
- DE-C1- 4 120 540
- FR-A- 2 760 060
- US-A- 4 704 683
- PATENT ABSTRACTS OF JAPAN Bd. 018, Nr. 168 (M-1580), 22. März 1994 (1994-03-22) -& JP 05 332426 A (MAZDA MOTOR CORP), 14. Dezember 1993 (1993-12-14)

## Beschreibung

Die Erfindung betrifft ein Automatikgetriebe für ein Kraftfahrzeug mit stufenlos verstellbarer Übersetzung, das in einem Konstantfahrmodus oder in einem Beschleunigungsmodus betreibbar ist.

Stufenlose Automatikgetriebe, die auch als CVT-Getriebe (Continuously Variable Transmission) bezeichnet werden, basieren auf dem Prinzip der Umschlingungsgetriebe, bei denen das Übersetzungsverhältnis zwischen der kürzesten und der längsten Übersetzung mit Hilfe eines sogenannten Variators stufenlos geregelt werden kann. Eine derartige stufenlose Übersetzung ist zur optimalen Ausnutzung des von dem Motor erzeugten Drehmoments am besten geeignet. Da die Übersetzung stufenlos verändert werden kann, steht sowohl für eine leistungsorientierte aber auch für eine verbrauchsorientierte Fahrweise immer eine passende Übersetzung zur Verfügung, bei der der Motor im optimalen Betriebsbereich arbeiten kann.

Der Variator besteht aus zwei Kegelscheibenpaaren, dem Primärscheibensatz und dem Sekundärscheibensatz sowie einem Umschlingungsmittel, das beispielsweise als Laschenkette ausgebildet sein kann und als Kraftübertragungselement dient. Der Primärscheibensatz wird vom Motor angetrieben, das Motormoment wird über die Kette auf den Sekundärscheibensatz übertragen und in den Achsantrieb geleitet. Jeweils eine Kegelscheibe eines Scheibensatzes ist auf einer Welle verschiebbar, wodurch der Laufdurchmesser der Kette und somit die Übersetzung stufenlos verstellt werden kann. Die Änderungen der Übersetzung erfolgen ruckfrei und ohne Zugkraftunterbrechung.

Ein Automatikgetriebe wird in dem Artikel "Multitronic - das neue Automatikgetriebe von Audi" (ATZ Automobiltechnische Zeitschrift, 2000, Ausgaben 7/8 und 9) beschrieben. Dieses CVT-Getriebe kann entweder in einem Konstantfahrmodus oder in einem Beschleunigungsmodus betrieben werden. Im Konstantfahrmodus wird in Abhängigkeit von der Fahrsituation eine feste Solldrehzahl vorgegeben, die beispielsweise von der Geschwindigkeit oder der Steigung abhängig ist.

Im Beschleunigungsmodus wird bei konstanter Fahrpedalstellung die Solldrehzahl fortlaufend erhöht, wobei der Anstieg der Erhöhung von der Fahrsituation abhängig ist. Über die Änderung des Fahrpedalwinkels kann der Fahrer stufenlose Drehzahlerhöhungen bzw. die Verringerung der Drehzahl hervorrufen. Wenn das Getriebe im Beschleunigungsmodus betrieben wird, wird die Antriebsdrehzahl in der Drehzahlnachführung kontinuierlich, stufenlos gesteigert. Obwohl sich dieses Getriebe in der Praxis sehr gut bewährt hat, wird es teilweise als nachteilig angesehen, dass sich das Getriebe im Beschleunigungsmodus anders als herkömmliche Stufenautomaten verhält.

Ein Getriebe mit den Merkmalen des Oberbegriffs des Anspruchs 1 ist aus der FR 2 760 060 bekannt.

Der Erfindung liegt daher das Problem zugrunde, ein Getriebe zu schaffen, das ein verbessertes Fahrerlebnis vermittelt.

Zur Lösung dieses Problems ist ein Automatikgetriebe mit den Merkmalen des Anspruchs 1 vorgesehen.

Anders als bei dem herkömmlichen Getriebe, bei dem sämtliche Drehzahländerungen im Beschleunigungsmodus stufenlos stattfinden, werden die Drehzahlen erfindungsgemäß so vorgegeben, dass ein ähnlicher Eindruck wie bei einem gestuften Getriebe entsteht. Wenn der Fahrer durch mehr oder weniger starkes Betätigen des Fahrpedals im Beschleunigungsmodus eine Drehzahländerung auslöst, dann erfolgt der Übergang auf die neue Drehzahl durch einen Drehzahlsprung, der innerhalb eines sehr kurzen Zeitintervalls vorgenommen wird. Auf diese Weise verhält sich das erfindungsgemäße stufenlos verstellbare Automatikgetriebe wie ein manuell geschaltetes oder automatisches Getriebe mit Schaltstufen.

Eine stufenweise Erhöhung der Drehzahl im Beschleunigungsmodus entspricht dem Rückschalten bei einem herkömmlichen Getriebe.

Gemäß einer ersten nicht zur Erfindung gehörende Ausführungsform ist es vorgesehen, dass der Drehzahlanstieg während einer Beschleunigungsphase zumindest abschnittsweise unabhängig von der Übersetzung ist. In dieser Betriebsart existiert keine konstante Übersetzung wie beispielsweise bei einem herkömmlichen Schaltgetriebe, sondern es existieren Phasen, in denen die Drehzahl z.B. stufenlos erhöht wird, was einer sich ändernden Übersetzung entspricht. Daneben können auch Phasen vorgesehen sein, in denen die Drehzahl gestuft erhöhbar oder verringerbar ist. Dabei wird es besonders bevorzugt, dass die Drehzahl während der Anfangsphase des Beschleunigungsmodus gestuft auf einen höheren Drehzahlwert gebracht wird, anschließend kann die Drehzahl kontinuierlich, stufenlos weiter erhöht werden. Diese Variante kann als Hybridmodus mit stufenloser Drehzahlerhöhung bezeichnet werden.

Gemäß der Erfindung ist es vorgesehen, dass die Drehzahl während einer Beschleunigungsphase bei näherungsweise konstanter Übersetzung erhöhbar ist. Bei dieser Variante wird der Eindruck eines Automatikgetriebes mit festen Gängen erzeugt und beim Beschleunigen werden nacheinander mehrere Drehzahlanstiege mit jeweils konstanter Übersetzung durchlaufen, um die gewünschte Endgeschwindigkeit zu erreichen. Diese Variante kann als Hybridmodus mit festen Gängen bezeichnet werden.

Bei dem Hybridmodus mit festen Gängen kann es vorgesehen sein, dass nach einer Beschleunigungsphase in Abhängigkeit von der Stellung des Fahrpedals eine weitere gestufte Drehzahlerhöhung oder eine gestufte Drehzahlverringerung einstellbar ist. Falls durch die Stellung des Fahrpedals signalisiert wird, dass der Fahrer eine stärkere Geschwindigkeitserhöhung wünscht, kann eine zweite sprunghafte Drehzahlerhöhung durchgeführt werden, die einem Rückschalten entspricht, um die gewünschte Endgeschwindigkeit in kürzerer Zeit zu erreichen. In dem anderen Fall, wenn der Fahrer das Fahrpedal weniger stark betätigt, kann eine sprunghafte Drehzahlverringerung erfolgen, die einem Hochschalten entspricht. Anschließend kann die gewünschte Endgeschwindigkeit durch eine weitere, jedoch verringerte, Drehzahlsteigerung erreicht werden.

Die Schaltstufen für die Drehzahlerhöhung oder -verringerung sind bei dem erfindungsgemäßen Automatikgetriebe als Kennlinie oder Kennfeld vorgegeben, gegebenenfalls in Abhängigkeit weiterer Größen wie die Stellung des Fahrpedals oder der Geschwindigkeit. Auf diese Weise wird jeder Fahrsituation eine Schaltstufe zugeordnet.

Das erfindungsgemäße Automatikgetriebe kann so ausgebildet sein, dass im Beschleunigungsmodus bis zum Erreichen der Höchstgeschwindigkeit fünf bis zehn, insbesondere sieben Schaltstufen vorgesehen sind. Durch die mehrfache sprunghafte Reduzierung der Drehzahl wird ein besonders sportlicher und dynamischer Fahreindruck erzeugt.

Bei der Drehzahlerhöhung und der Drehzahlverringerung werden nicht dieselben Schaltstufen durchgelaufen, sondern es sind jeweils separate Schaltstufen festgelegt.

Bei dem erfindungsgemäßen Automatikgetriebe kann einer Schaltstufe eine minimale und eine maximale Drehzahl zugeordnet sein, bei deren Unterschreiten bzw. Überschreiten die stufenartige Drehzahlveränderung auslösbar ist. Es ist nicht erforderlich, dass die minimalen und maximalen Drehzahlen der einzelnen Schaltstufen übereinstimmen, diese können ebenfalls variieren.

Ein besonders hoher Bedienkomfort lässt sich bei dem erfindungsgemäßen Automatikgetriebe erzielen, wenn die gestufte Drehzahländerung in Abhängigkeit des gewählten Fahrprogramms aktivierbar ist. Es kann beispielsweise vorgesehen sein, dass die erfindungsgemäße gestufte Drehzahländerung lediglich in dem Fahrprogramm S aktiviert werden kann, das für eine sportliche Fahrweise steht. In dem Fahrprogramm D kann die gestufte Drehzahländerung jedoch nicht aktiviert werden und das Automatikgetriebe verhält sich wie ein herkömmliches CVT-Getriebe. Das entsprechende Fahrprogramm, in dem die gestufte Drehzahländerung aktivierbar ist, kann zweckmäßig durch die Betätigung eines Wählhebels für die einzelnen Fahrprogramme ausgewählt werden.

Es kann jedoch auch vorgesehen sein, dass die gestufte Drehzahländerung im Beschleunigungsmodus automatisch in Abhängigkeit von der Fahrweise aktivierbar ist. Beispielsweise kann eine sportliche Fahrweise anhand der Längs- und Querbeschleunigung und weiterer Parameter erfasst werden. Damit bietet sich die Möglichkeit, die erfindungsgemäße stufenartige Drehzahländerung situationsabhängig durchzuführen, z.B. wenn eine leistungsorientierte, sportliche Fahrweise erkannt worden ist.

Es kann auch vorgesehen sein, dass die gestufte Drehzahländerung bei einem herkömmlichen Automatikgetriebe durch ein Update der Software nachrüstbar ist. Die Software für die Getriebesteuerung ist in einem Flashspeicher gespeichert, der bei Bedarf umprogrammiert werden kann. Auf diese Weise besteht die Möglichkeit, ältere Automatikgetriebe auf den neuesten Stand der Software zu bringen.

Die Erfindung betrifft ferner ein Kraftfahrzeug, das ein Automatikgetriebe der beschriebenen Art umfasst.

Weitere Vorteile und Einzelheiten der Erfindung werden anhand eines Ausführungsbeispiels unter Bezugnahme auf die Figuren erläutert. Die Figuren sind schematische Zeichnungen und zeigen:
- Fig. 1: ein Drehzahl-Geschwindigkeits-Diagramm eines herkömmlichen CVT-Automatikgetriebes; und
- Fig. 2: Drehzahl-Geschwindigkeits-Diagramme eines ersten und eines zweiten Ausführungsbeispiels.

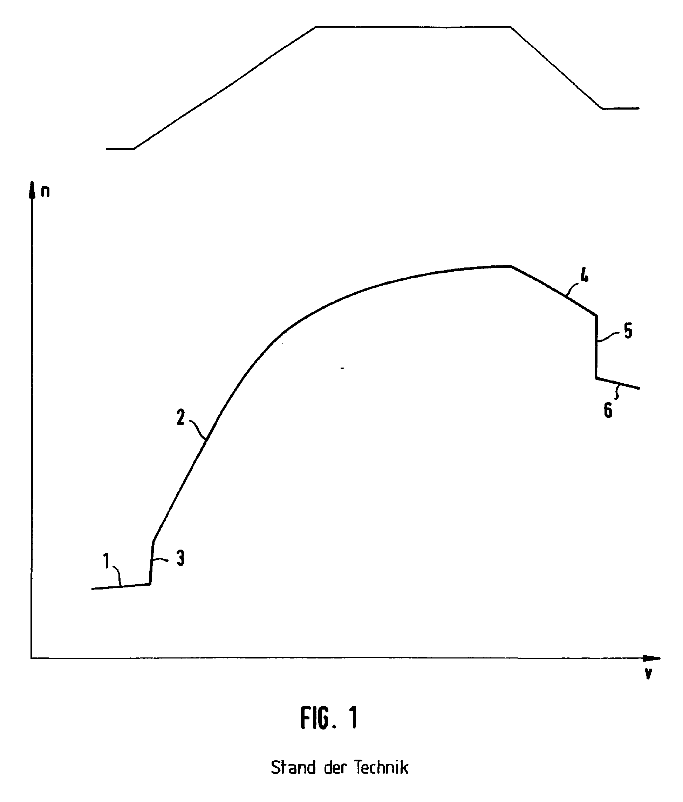

Fig. 1 zeigt ein Drehzahl-Geschwindigkeits-Diagramm eines herkömmlichen CVT-Automatikgetriebes. Die Fahrgeschwindigkeit ist auf der waagerechten Achse eingetragen, die Drehzahl auf der senkrechten Achse. Oberhalb des Diagramms ist die jeweilige Stellung des Fahrpedals dargestellt.

Das in ein Kraftfahrzeug eingebaute Automatikgetriebe mit stufenlos verstellbarer Übersetzung ist in einem Konstantfahrmodus oder in einem Beschleunigungsmodus betreibbar. In dem Konstantfahrmodus 1 hat das Getriebe eine feste Solldrehzahl, die in Abhängigkeit von der Fahrsituation vorgegeben ist. Wenn durch die Betätigung des Fahrpedals eine deutlich höhere Leistung angefordert wird als zum Konstantfahren erforderlich ist, wird in den Beschleunigungsmodus 2 gewechselt. Der Konstantfahrmodus 1 ermöglicht ein verbrauchsgünstiges Fahren im stationären Betrieb, demgegenüber erlaubt der Beschleunigungsmodus 2 spontanes und dynamisches Fahren.

Beim Umschalten in den Beschleunigungsmodus 2 erfolgt ein Drehzahlsprung 3, anschließend wird die erhöhte Drehzahl stufenlos weiter erhöht. Oberhalb des Drehzahl-Geschwindigkeits-Diagramms ist der Verlauf des Fahrpedalwinkels dargestellt. Es ist erkennbar, dass die Drehzahl so lange erhöht wird, wie der Fahrer das Fahrpedal weiter durchdrückt. Sobald das Fahrpedal konstant gehalten wird, erfolgt lediglich noch eine geringe stufenlose Drehzahlerhöhung, wobei die Solldrehzahl asymptotisch angenähert wird.

Wenn der Fahrer im weiteren Verlauf den Fuß vom Fahrpedal nimmt, wird die Drehzahl im Abschnitt 4 stufenlos abgesenkt. Im letzten Abschnitt des Diagramms des Fahrpedalwinkels wird das Fahrpedal konstant gehalten. Daraufhin wird von dem Beschleunigungsmodus 2 über einen Drehzahlsprung 5 wieder in den Konstantfahrmodus 6 geschaltet.

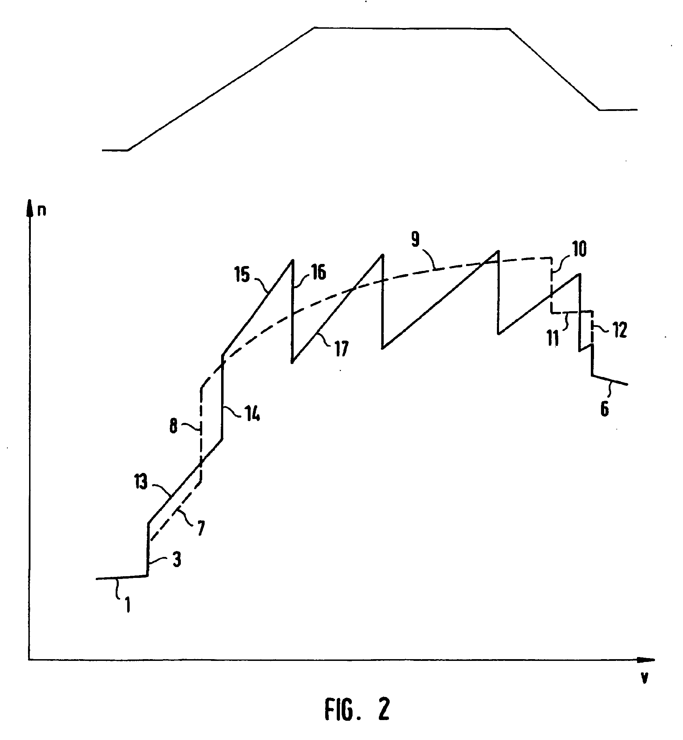

Fig. 2 zeigt die Drehzahl-Geschwindigkeits-Diagramme eines ersten und eines zweiten Ausführungsbeispiels.

Das Diagramm des ersten nicht zur Erfindung gehörenden Ausführungsbeispiels ist als gestrichelte Linie gezeichnet, das Diagramm des zweiten Ausführungsbeispiels ist als durchgehende Linie gezeichnet.

Der Konstantfahrmodus 1 und der Drehzahlsprung 3 beim Übergang in den Beschleunigungsmodus entsprechen denjenigen von Fig. 1. Abweichend davon erfolgt eine Drehzahlerhöhung aufgrund einer Fahrpedalwinkelerhöhung, zusätzlich zur stufenlosen Drehzahlerhöhung 7, über eine gestufte Rückschaltung 8.

Im Anschluss an die Drehzahlerhöhung 7 erfolgt ein Drehzahlsprung 8, da das Fahrpedal von dem Fahrer kontinuierlich weiter gedrückt wird. Die sprunghafte Drehzahlsteigerung entspricht dem Herunterschalten bei einem herkömmlichen Schaltgetriebe oder bei einem herkömmlichen Stufenautomaten. Der Fahrer hat den Eindruck, dass das Getriebe in einen niedrigeren Gang umschaltet und das Fahrzeug besser beschleunigt.

Anschließend erfolgt eine stufenlose Drehzahlerhöhung 9, die analog zu dem in Fig. 1 beschriebenen Ablauf abläuft. Wenn das Fahrpedal bis zu einem Schwellwert nachgelassen wird, wird die Drehzahl über eine Stufe 10 sprunghaft abgesenkt, so dass sich der Eindruck eines hochschaltenden Getriebes ergibt. Anschließend wird die Drehzahl im Abschnitt 11 geringfügig erhöht. Wenn das Fahrpedal nur noch konstant gehalten wird, geht das Automatikgetriebe über einen weiteren Drehzahlsprung 12 in den Konstantfahrmodus 6 über.

Ein Ausführungsbeispiel der Erfindung wird in Fig. 2 durch die durchgehende Linie dargestellt.

Im Anschluss an den Drehzahlsprung 3 beim Übergang von dem Konstantfahrmodus 1 in den Beschleunigungsmodus erfolgt eine Drehzahlerhöhung 13 mit konstanter Übersetzung. Diese Übersetzung wird durch die Steuerung des Variators des Automatikgetriebes eingestellt. Die Übersetzung muss nicht notwendigerweise mit der eines echten Getriebes übereinstimmen, eine "virtuelle" Übersetzung ist daran erkennbar, dass deren Verlängerung nicht durch den Nullpunkt des Drehzahl-Geschwindigkeits-Diagramms verläuft. Diese Drehzahlerhöhung 13 entspricht einem Gang, der durch seine minimale Drehzahl und seine maximale Drehzahl definiert ist. Nach dem Unterschreiten der minimalen Drehzahl für diesen Gang erfolgt ein Drehzahlsprung 14 der von dem Fahrer als Herunterschalten empfunden wird. Anschließend wird die Drehzahl im nächsten Gang 15 bis zu einem Maximalwert weiter erhöht. Die anschließende sprunghafte Drehzahlabsenkung 16 wird als Hochschalten empfunden, die von einer Drehzahlerhöhung 17 im nächsten Gang gefolgt wird. Die Endgeschwindigkeit wird wie bei einem Schaltgetriebe oder einem Stufenautomaten durch mehrere aufeinander folgende Schalt- und Beschleunigungsvorgänge erreicht.

Dieser Hybridmodus mit festen Gängen wird aktiviert, wenn das Fahrprogramm S gewählt ist. Alternativ kann er auch im Fahrprogramm D aktiviert werden, wenn die Längs- und/oder Querbeschleunigung des Fahrzeugs einen festgelegten Schwellwert überschreitet. In diesem Beschleunigungsmodus ist ein besonders sportliches Fahren möglich, das einen dynamischen Fahreindruck vermittelt.

## Patentansprüche

1. Automatikgetriebe für ein Kraftfahrzeug mit stufenlos verstellbarer Übersetzung, das in einem Konstantfahrmodus oder in einem Beschleunigungsmodus, in dem die Drehzahl gestuft erhöhbar oder verringerbar ist, betreibbar ist, wobei die Drehzahl während einer Beschleunigungsphase mit näherungsweise konstanter Übersetzung erhöhbar ist und die Schaltstufen für die Drehzahlerhöhung oder Drehzahlverringerung als Kennlinie oder Kennfeld fest vorgegeben sind,
**dadurch gekennzeichnet,**
**dass** für die Drehzahlerhöhung und die Drehzahlverringerung jeweils separate Schaltstufen festgelegt sind.

2. Automatikgetriebe nach Anspruch 1,
**dadurch gekennzeichnet,**
**dass** der Drehzahlanstieg während einer Beschleunigungsphase zumindest abschnittsweise unabhängig von der Übersetzung ist.

3. Automatikgetriebe nach Anspruch 1,
**dadurch gekennzeichnet,**
**dass** nach einer Beschleunigungsphase in Abhängigkeit von der Stellung des Fahrpedals eine weitere gestufte Drehzahlerhöhung oder eine gestufte Drehzahlverringerung einstellbar ist.

4. Automatikgetriebe nach Anspruch 1,
**dadurch gekennzeichnet,**
**dass** für die Beschleunigungsmodus bis zum Erreichen der Höchstgeschwindigkeit fünf bis acht, insbesondere sieben Schaltstufen vorgesehen sind.

5. Automatikgetriebe nach Anspruch 1,
**dadurch gekennzeichnet,**
**dass** einer Schaltstufe eine minimale und eine maximale Drehzahl zugeordnet ist und beim Unterschreiten bzw. Überschreiten eine gestufte Drehzahlveränderung auslösbar ist.

6. Automatikgetriebe nach einem der vorangehenden Ansprüche,
**dadurch gekennzeichnet,**
**dass** die gestufte Drehzahländerung im Beschleunigungsmodus in Abhängigkeit des gewählten Fahrprogramms aktivierbar ist.

7. Automatikgetriebe nach einem der vorangehenden Ansprüche,
**dadurch gekennzeichnet,**
**dass** die gestufte Drehzahländerung im Beschleunigungsmodus in Abhängigkeit von der Fahrweise aktivierbar ist.

8. Automatikgetriebe nach einem der vorangehenden Ansprüche,
**dadurch gekennzeichnet,**
**dass** die gestufte Drehzahländerung durch ein Update der Software in einem Steuergerät nachrüstbar ist.

9. Kraftfahrzeug,
**dadurch gekennzeichnet,**
**dass** es ein Automatikgetriebe nach einem der Ansprüche 1 bis 8 umfasst.

## Claims

1. Automatic transmission for a motor vehicle having a continuously variable transmission ratio, which can be operated in a constant driving mode or in an acceleration mode in which the rotational speed can be increased or decreased in a stepped manner, wherein the rotational speed can be increased during an acceleration phase with an approximately constant transmission ratio and the shift stages for the rotational speed increase or rotational speed decrease are fixedly predetermined as a characteristic curve or family of characteristic curves,
**characterized**
**in that** separate shift stages are respectively defined for the rotational speed increase and the rotational speed decrease.

2. Automatic transmission according to Claim 1,
**characterized**
**in that** the rise in rotational speed during an acceleration phase is independent of the transmission ratio at least in sections.

3. Automatic transmission according to Claim 1,
**characterized**
**in that** after an acceleration phase, depending on the position of the accelerator pedal, a further stepped rotational speed increase or a stepped rotational speed decrease can be set.

4. Automatic transmission according to Claim 1,
**characterized**
**in that** five to eight, in particular seven, shift stages are provided for the acceleration mode until the maximum speed is reached.

5. Automatic transmission according to Claim 1,
**characterized**
**in that** a minimum and a maximum rotational speed are assigned to a shift stage and a stepped rotational speed change can be triggered in the event of undershooting and overshooting, respectively.

6. Automatic transmission according to any of the preceding claims,
**characterized**
**in that** the stepped rotational speed change can be activated in the acceleration mode depending on the driving programme chosen.

7. Automatic transmission according to any of the preceding claims,
**characterized**
**in that** the stepped rotational speed change can be activated in the acceleration mode depending on the manner of driving.

8. Automatic transmission according to any of the preceding claims,
**characterized**
**in that** the stepped rotational speed change can be retrofitted by an update of the software in a control unit.

9. Motor vehicle,
**characterized**
**in that** it comprises an automatic transmission according to any of Claims 1 to 8.

## Revendications

1. Boîte de vitesse automatique pour un véhicule automobile, à transmission variable en continu, qui peut fonctionner dans un mode de conduite constante ou dans un mode d'accélération, dans lequel le régime peut être augmenté ou réduit de manière étagée, le régime pendant une phase d'accélération pouvant être augmenté avec une multiplication pratiquement constante et les étages de commutation pour l'augmentation de régime ou la réduction de régime étant prédéfinis fixement en tant que courbe caractéristique ou champ caractéristique,
**caractérisée en ce que**
pour l'augmentation de régime et la réduction de régime, des étages de commutation séparés sont à chaque fois établis.

2. Boîte de vitesse automatique selon la revendication 1,
**caractérisée en ce que**
l'augmentation de régime pendant une phase d'accélération est au moins en partie indépendante de la multiplication.

3. Boîte de vitesse automatique selon la revendication 1,
**caractérisée en ce**
**qu'**après une phase d'accélération, en fonction de la position de la pédale d'accélération, une augmentation de régime étagée supplémentaire ou une réduction de régime étagée peuvent être ajustées.

4. Boîte de vitesse automatique selon la revendication 1,
**caractérisée en ce que**
pour le mode d'accélération jusqu'à l'obtention de la vitesse maximale, on prévoit cinq à huit, notamment sept étages de commutation.

5. Boîte de vitesse automatique selon la revendication 1,
**caractérisée en ce**
**qu'**à un étage de commutation est associé un régime minimal et un régime maximal, et lors du dépassement par le haut ou par le bas, une variation de régime étagée peut être déclenchée.

6. Boîte de vitesse automatique selon l'une quelconque des revendications précédentes,
**caractérisée en ce que**
la variation de régime étagée dans le mode d'accélération peut être activée en fonction du programme de conduite sélectionné.

7. Boîte de vitesse automatique selon l'une quelconque des revendications précédentes,
**caractérisée en ce que**
la variation de régime étagée dans le mode d'accélération peut être activée en fonction du mode de conduite.

8. Boîte de vitesse automatique selon l'une quelconque des revendications précédentes,
**caractérisée en ce que**
la variation de régime étagée peut être installée rétrospectivement par une mise à jour du logiciel dans un appareil de commande.

9. Véhicule automobile,
**caractérisé en ce**
**qu'**il comprend une boîte de vitesse automatique selon l'une quelconque des revendications 1 à 8.
